# EUROPÄISCHE PATENTANMELDUNG

(11) **EP 0 835 747 A2**
(43) Veröffentlichungstag der Anmeldung: **15.04.1998**
(21) Anmeldenummer: 97117308.3
(22) Anmeldetag: 07.10.1997
(51) Int. Cl.: B29D 30/44

(54) **Verfahren zum Transport eines Gürtelaufbaustreifens zum Aufbau eines Gürtels für einen Fahrzeugluftreifen**

(30) Priorität: 09.10.1996 DE 19641509
(71) Anmelder: Continental Aktiengesellschaft, 30165 Hannover (DE)
(72) Erfinder: Kölker, Martin, 30163 Hannover (DE); Sergel, Horst, 30657 Hannover (DE)

(57) **Zusammenfassung**

Verfahren zum Transport eines Gürtelaufbaustreifens für den Aufbau eines Gürtels für einen Fahrzeugluftreifen mit parallelen schräg zur Förderrichtung verlaufend angeordneten in Kautschuk eingebetteten Festigkeitsträgern, insbesondere aus Stahl, zu einer nachgeordneten Weiterverarbeitungseinrichtung und zum Aufbereiten des Gürtelaufbaustreifens zur Weiterverarbeitung in der nachgeordneten Weiterverarbeitungseinrichtung, z.B. einer Gürtelaufbautrommel, wobei der Gürtelaufbaustreifen, der quer zur Förderrichtung zu beiden Seiten hin durch jeweils eine Seitenkante und an seiner vorderen in Förderrichtung und an seiner hinteren in Gegenförderrichtung gerichteten Seite durch eine Vorderkante bzw. durch eine Hinterkante begrenzt ist, die im wesentlichen parallel zu Festigkeisträgern schräg verlaufen, so daß die Vorderkante mit der einen Seitenkante und die Hinterkante mit der anderen Seitenkante jeweils unter Einschluß eines spitzen Winkels von insbesondere 10 bis 35° eine vordere Streifenspitze bzw. eine hintere Streifenspitze bildet, über wenigstens zwei in Förderrichtung hintereinander angeordnete, insbesondere umlaufende Fördermittel zur Weiterverarbeitungseinrichtung gefördert wird und dabei jeweils ohne seitlichen Anschlag seitlich ausgerichtet wird.

## Beschreibung

Die Erfindung betrifft ein Verfahren zum Transport eines Gürtelaufbaustreifens für den Aufbau eines Gürtels für einen Fahrzeugluftreifen mit parallelen schräg zur Förderrichtung verlaufend angeordneten in Kautschuk eingebetteten Festigkeitsträgern, insbesondere aus Stahl, zu einer nachgeordneten Weiterverarbeitungseinrichtung und zum Aufbereiten des Gürtelaufbaustreifens zur Weiterverarbeitung in der nachgeordneten Weiterverarbeitungseinrichtung, z.B. einer Gürtelaufbautrommel, wobei der Gürtelaufbaustreifen, der quer zur Förderrichtung zu beiden Seiten hin und durch jeweils eine Seitenkante an seiner vorderen in Förderrichtung und an seiner hinteren in Gegenförderrichtung gerichteten Seite durch jeweils eine Vorderkante bzw. durch eine Hinterkante begrenzt ist, die im wesentlichen parallel zu Festigkeitsträgern schräg verlaufen, so daß die Vorderkante mit der einen Seitenkante und die Hinterkante mit der anderen Seitenkante jeweils unter Einschluß eines spitzen Winkels von insbesondere 10 bis 35° eine vordere Streifenspitze bzw. eine hintere Streifenspitze bildet, über wenigstens zwei in Förderrichtung hintereinander angeordnete, insbesondere umlaufende Fördermittel zur Weiterverarbeitungseinrichtung gefördert wird und dabei jeweils ohne seitlichen Anschlag seitlich ausgerichtet wird. Die Erfindung betrifft außerdem eine Vorrichtung zur Förderung und zum Aufbereiten eines Gürtelaufbaustreifens zum Aufbau eines Gürtels eines Fahrzeugluftreifens mit parallelen schräg zur Förderrichtung verlaufend angeordneten in Kautschuk eingebetteten Festigkeitsträgern, insbesondere aus Stahl, zur Weiterverarbeitung in einer nachgeordneten Weiterverarbeitungseinrichtung, insbesondere einer Gürtelaufbautrommel, wobei zwei hintereinander angeordnete umlaufende Fördermittel ausgebildet sind, von denen wenigstens das in Förderrichtung vorgeordnete Fördermittel gesteuert seitlich verschiebbar ausgebildet ist.

Es ist bekannt, Gürtelaufbaustreifen zum Aufbau eines Gürtels eines Fahrzeugluftreifens aus parallelen schräg zur Förderrichtung verlaufend angeordneten in Kautschuk eingebetteten Stahlcorden auszubilden und über umlaufende Förderbänder zu einer Gürtelaufbautrommel zu fördern. Das vordere Ende des der Gürtelaufbautrommel zugeführten Gürtelaufbaustreifens wird auf die-Trommel aufgelegt, die Gürtelaufbautrommel wird um ihre Achse verdreht und dabei der Gürtelaufbaustreifen einmal um den Umfang der Gürtelaubautrommel gewickelt, so daß die Hinterkante des aufgewickelten Gürtelaufbaustreifens auf der Trommel in Berührkontakt mit der Vorderkante des Gürtelaufbaustreifens kommt. Entlang ihrer Vorderkante bzw. Hinterkante werden die beiden Enden des Gürtelaufbaustreifens ohne Überlappung der Stahlcorde miteinander verspleißt. Anschließend wird üblicherweise eine zweite oder weitere Gürtellage auf die erste Gürtellage in der gleichen Weise aufgebracht. Damit die Stahlcorde, die bei radialen Fahrzeugluftreifen mit radialer Karkasse im Fahrzeugluftreifen gewünschten Ausrichtung mit spitzem Winkel zwischen 10° und 30° zur Äquatorebene erhalten, werden die Gürtelaufbaustreifen so ausgebildet, daß die Stahlcorde bereits beim Auflegen einen spitzen Winkel, beispielsweise 10 bis 30° zur Umfangsrichtung einnehmen.

Um die Funktionsfähigkeit eines Fahrzeugluftreifens nicht zu gefährden, wird es möglichst vermieden, daß Stahlcorde in der axialen Erstreckung des Gürtels unterbrochen sind. Daher muß auch das vordere Ende und auch das rückwärtige Ende des Gürtelaufbaustreifens beim Auflegen im wesentlichen parallel zur Ausrichtung der Stahlcorde und somit ebenfalls unter Einschluß des spitzen Winkels zur Umfangsrichtung ausgebildet sein. Daher werden die Gürtelaufbaustreifen mit seitlichen im wesentlichen parallelen Seitenkanten und jeweils einer schräg verlaufenden Vorderkante und mit einer schräg verlaufenden rückwärtigen Hinterkante ausgebildet, so daß die den spitzen Winkel mit der einen Seitenkante einschließende Vorderkante mit dieser Seitenkante eine vordere im wesentlichen dreieckige Spitze bildet, auf der sich ein durch die beiden Seitenkanten seitlich begrenzter nahezu rechteckiger Hauptteil und im Anschluß daran ein unter Einschluß des spitzen Winkels zu der anderen Seitenkante ausgerichtete rückwärtige Seitenkante mit dieser Seitenkante eine rückwärtige im wesentlichen dreieckige Spitze bildet. Dieser Aufbaustreifen wird üblicherweise mit seiner vorderen Spitze voran zur Gürtelaufbautrommel gefördert.

Die Seitenkanten des aus Kautschuk und Stahlcord gebildeten Gürtelaufbaustreifens sind üblicherweise aus Fertigungsgründen sowie durch äußere Krafteinflüsse während der Förderung in ihrem Kantenverlauf nicht geradlinig, sondern krummlinig, wobei die Krummlinigkeit beider Seitenkanten unterschiedlich zueinander ausgestaltet ist, so daß auch die in Förderrichtung verlaufende Mittensymmetrielinie zwischen den Seitenkanten eine zwischen den beiden Seitenkanten verlaufende krummlinige Kurve darstellt.

Darüber hinaus sind üblicherweise auch die beiden Spitzen aufgrund verschiedener äußerer Krafteinwirkungen sowie aufgrund der plastischen Verformbarkeit des Materials häufig unregelmäßig verkrümmt. Die Spitzen können dabei sowohl axial nach innen als auch axial nach außen oder sogar unter Richtungswechsel gekrümmt ausgebildet sein. Die Gürtelaufbaustreifen werden üblicherweise von einem kontinuierlichen Gürtelaufbauband mit Schnitt parallel zu den schräg verlaufenden Stahlcorden hergestellt, so daß beim Schneiden die Hinterkante des vorangegangenen Gürtelaufbaustreifens bzw. die Vorderkante des nachfolgenden Gürtelaufbaustreifens gebildet wird. Durch die Schneidebewegung des Messers von der einen Seitenkante zur anderen Seitenkante wird dabei beispielsweise Kautschukmaterial mit zur Seite gezogen, so daß die vordere und die hintere Spitze verkrümmt werden. Diese Krümmung kann indes auch durch andere äußere Krafteinwirkungen während der Herstellung des Gürtelaufbaustreifens oder während der Förderung zur Gürtelaufbautrommel erfolgen. Beispielsweise sind Seitenkantenanschläge oder Vorderkantenanschläge aufgrund der mechanischen Berührung eine Gefahrenquelle zur Entstehung derartiger Verkrümmungen.

Beim Auflegen eines derartigen Gürtelaufbaustreifens bewirken die Unregelmäßigkeiten im Konturverlauf der Seitenkanten sowie die Verkrümmungen im Bereich der vorderen Spitze und im Bereich der hinteren Spitze, daß die zu verspleißenden vorderen Enden axial zueinander versetzt sein können und daß dann kein paralleler berührender Konturverlauf zwischen Vorderkante und Hinterkante vorhanden ist, wodurch die Herstellung einer zuverlässigen Spleißnaht erschwert und im Extremfall verhindert werden kann.

Der unregelmäßig, ungleichmäßig gekrümmte Verlauf der beiden Seitenkanten zueinander und die hierdurch erzeugte gekrümmt verlaufende zwischen den Seitenkanten gebildete Symmetrieachse bewirkt, daß der Gürtelaufbaustreifen über den Umfang des Reifens mit eine unregelmäßige axiale Erstreckung und Positionierung erhält. Die Fahreigenschaften, die Einförmigkeit, sowie die Funktionsfähigkeit eines derartig gebildeten Fahrzeugluftreifens werden hierdurch gefährdet.

Aus der DE 39 13 240 C2 ist es bekannt, einen endseitig schräg beschnittenen Metallcordstreifen zur Herstellung eines Fahrzeugluftreifens durch beiderseits des Metallcordstreifens gemeinsam axial einstellbare seitliche Führungsrollen in dem Verlauf seiner Seitenkanten zu begradigen. Der Metallcordstreifen wird an diesen durch die seitlichen Führungsrollen gebildeten seitlichen Anschlägen vorbei gefördert und dabei seitlich auf die gewünschte Breite gepreßt. Hierdurch werden die Seitenkanten zwar begradigt, allerdings werden sie hierdurch unregelmäßig dick ausgebildet, da lediglich das über die durch die seitlichen Führungsrollen gebildete Begrenzungskante nach axial außen reichende Kautschukmaterial im Streifenrandbereich nach innen zum Streifen hin gedrückt wird und das Kautschukmaterial nach oben oder unten ausweicht. Aus dem zuvor ungleichmäßigen und zueinander unregelmäßigen Konturverlauf der beiden Seitenkanten wird ein unregelmäßiger und zueinander ungleichmäßig unregelmäßiger Dickenverlauf der Seitenkanten. Da somit in beiden Seiten des fertigen Fahrzeugluftreifens nicht nur Unregelmäßigkeiten des Dickenverlaufes, sondern darüber hinaus die beiden unregelmäßigen Dickenverläufe ungleichmäßig unregelmäßig ausgebildet sind, so daß am Fahrzeugluftreifen in unterschiedlichsten Umfangspositionen unterschiedliche maximale Dicken auf der einen Seite und auf der anderen Seite erzeugt werden, wird hierdurch die Einförmigkeit des Reifens beeinträchtigt. Durch die nur miteinander gemeinsam verstellbaren seitlichen Führungsrollen wird auch das gewünschte Breitenformat, den der Streifen einnehmen soll, eingestellt. Dadurch werden zwar solche Unregelmäßigkeiten im Konturverlauf begradigt, die über die eingestellte Seitenposition der Führungsrollen hinausgehen.

Unregelmäßigkeiten im Seitenkantenverlauf, die die seitliche Position der Führungsrollen nicht erreichen, werden nicht verändert. Hierdurch können unregelmäßige Krümmungsverläufe beider Seitenkanten verbleiben, wodurch die Einförmigkeit und die Fahreigenschaften sowie die Funktionsfähigkeit des Fahrzeugreifens weiter beeinträchtigt sein können. Zur Bearbeitung der Spitzen des Metallcordstreifens werden seitlich verschwenkbare Magnete an die Spitzen herangeführt, die die Stahlcorde im Metallcordstreifen an einen seitlichen mechanischen Anschlag ziehen sollen. Soweit die Spitzen tatsächlich bis an die Anschläge gezogen werden, sollen diese dort an den Anschlägen in ihrer Seitenkante ausgerichtet werden. Auch hierdurch erfolgt die Ausrichtung, soweit sie erfolgt, lediglich durch Zusammenquetschen der Seitenkante unter Inkaufnahme der Erhöhung der Materialdicke. Um die Spitzen, insbesondere von Gürtelaufbaustreifen mit sehr zähem Kautschukmaterial wirklich sicher an den Anschlag heranziehen zu können, sind bei einer solchen Vorrichtung sehr starke Magnete erforderlich. Hierdurch wird eine nach axial innen gekrümmte Spitze des Metallcordstreifens durch sehr starke Magneten dann möglicherweise tatsächlich soweit nach axial außen gezogen, daß die Seitenkante im Bereich der Spitze begradigt wird. Das durch den Anschlag dabei weggepresste Material führt vor allen Dingen zu einer Verdickung des Gürtelmaterials im Bereich der Seitenkante des Metallcordstreifens. Die verkrümmte Spitze wird dabei lediglich geringfügig aufgekrümmt und bleibt in ihrem Vorder- bzw. Hinterkantenverlauf im wesentlichen verkrümmt. Bei einer derartigen Ausrichtung ist die Gefahr groß, daß Vorder- und Hinterkante des Metallcordstreifens nach Auflegen auf eine Gürtelaufbautrommel nach wie vor einen deutlich gekrümmten, nicht parallelen Verlauf einnehmen, wodurch ein zuverlässiges Verspleißen gefährdet wird. Lediglich mit sehr starken Magneten ist bei manchen wenig zähen Kautschukarten mit sehr biegeweichen Stahlcorden gewährleistbar, daß die Vorder- und Hinterkante an die seitlichen Anschläge wirkungsvoll herangezogen werden und damit zumindest eine axiale Übereinstimmung der Lage der Vorder- und der Hinterkante auf der Gürtelaufbautrommel gewährleistet ist. Beim Wechsel der Kautschukart für den Gürtelaufbaustreifen besteht somit immer die Gefahr, daß die Ausrichtekraft der Magneten nicht gewährleistet ist. Wird ein Austausch gegen entsprechend stärkere Magneten vergessen, wird die Qualität der Fahrzeugluftreifen gefährdet.

Insgesamt ist die durch die DE 39 13 240 C2 beschriebene Vorrichtung zur Ausrichtung eines Metallcordstreifens in ihrem mechanischen Aufbau sehr aufwendig. Eine Vielzahl von Bauteilen, seitlichen Führungsrollen, Mechanismen zur Verstellung der seitlichen Führungsrollen, mechanische Anschläge, Hebel, seitlich verschwenkbare Magnete sind erforderlich, die einen erhöhten Aufwand für Herstellung und Wartung, beispielsweise der Vielzahl von unterschiedlichen Gelenken notwendig machen. Die Vielzahl der Bauteile bringt eine Vielzahl von Störquellen mit sich. Die Einwirkung der Vielzahl von mechanischen Bauteilen, wie mehrerer seitlicher Führungsrollen und seitlicher Anschläge, bringt darüber hinaus die Gefahr mit sich, daß aufgrund von Reibungseffekten zwischen den seitlich einwirkenden mechanischen Elementen und dem Metallcordstreifen zusätzliche, nicht gewollte Deformationen des Metallcordstreifens erzeugt werden.

Aus der US 4,769,104 ist es bekannt, einen Gürtelaufbaustreifen auf einem Förderband mittels zweier mechanischer seitlicher Ausrichteschienen, die aufeinander zubewegt werden, zusammenzuquetschen, wodurch die Seitenkanten begradigt werden sollen. Auch hier bewirkt die rein seitlich wirkende mechanische Kraft ein Begradigen der Seitenkante unter Materialverschiebung zu Lasten von unregelmäßigen Dicken-Veränderungen im Bereich der Seitenkante. Die seitlichen Ausrichteschienen werden bis zu einem bestimmten Abstand aufeinander zubewegt, seitliche nach innen gerichtete Ausbuchtungen, die axial nach innen zum Streifen hin über diese Position der seitlichen Ausrichteschienen hinausreichen und diese nicht berühren, werden nicht ausgerichtet. Somit können auch bei einer Ausrichtung mit einer Vorrichtung gemäß der US 4 769 104 ungleichförmige Unregelmäßigkeiten der Seitenkantenverläufe der beiden Seitenkanten zueinander und somit krummlinige Symmetrieachsen verbleiben. Zum Ausrichten der Spitzen des Gürtelaufbaustreifens wird zunächst ein erster mechanischer Schwenkhebel verschwenkt, der von außerhalb der Seitenkante an die vorderste Spitze der Seitenkante geschwenkt wird, wobei er lediglich Berührkontakt im vorderen Endbereich der Spitze mit der Spitze hat. Dieser Arm drückt das vordere Ende der Spitze nach axial innen, um so die Seitenkante in der Spitze auszurichten. Danach wird er wieder zurück von der Seitenkante weggeschwenkt. Ein zweiter mechanischer Arm, der sich über die gesamte Breite des Gürtelaufbaustreifens erstreckt, wird an die Vorderkante geschwenkt und soll diese begradigen, in dem er unter weiterer Verschwenkung wie ein mechanischer Anschlag gegen die Vorderkante drückt. Dabei wird das Kautschukmaterial entlang der Vorderkante und der Fertigung des Materials im Kantenbereich zusammengepreßt und das vorderste Ende der Spitze des Gürtelaufbaustreifens wieder nach axial außen gedrückt, so daß es dabei die durch den ersten Hebel halbwegs ausgerichtete Position wieder verlassen kann. Die Seitenkante im Spitzenbereich, die ohnehin nur durch die nahezu in Punktberührung des ersten Hebels an dem vordersten Spitzenende zur Ausrichtung nach innen gedrückt wurde, ist bereits vor Verschwenken des zweiten Hebels in ihrem Verlauf ansonsten nicht ausgerichtet. Durch die Betätigung des zweiten Arms wird zusätzlich geringfügig weiter verkrümmt, wobei sie, wie dargestellt, auch mit ihrem vorderen Ende der Spitze Gefahr läuft, die Ausrichtung noch vollständig zu verlassen. Die Vorderkante wird darüber hinaus nur dann einigermaßen zuverlässig durch den zweiten Hebel begradigt, wenn der Schwenkhebel möglichst gleichmäßig, d.h. in gleicher Ausrichtung auf die Vorderkante möglichst gleichmäßig einwirkt. Aufgrund der Hebelwirkung des Schwenkhebels sind die Krafteinwirkungen über die Länge der Vorderkante jedoch in Abhängigkeit vom Abstand zur Schwenkhebelachse unterschiedlich. Da der Schwenkhebel das Vorderkantenmaterial zur Ausrichtung geringfügig zusammendrücken soll, wird während der Schwenkbewegung das der Schwenkachse am nächsten gelegene Vorderkantenteil weniger als das der Schwenkbewegung am weitest entfernt gelegene Vorderkantenteil zusammengepreßt. Das die maximale Hebelwirkung aufnehmende, von der Schwenkachse weiter entfernt liegende Ende der Spitze wird somit zusätzlich stark belastet und somit wird die Gefahr, daß dieses Ende seine durch den ersten Hebel erzeugte Ausrichtposition verläßt, zusätzlich erhöht. Spitzen eines Gürtelaufbaustreifens, die nach seitlich außen vom Gürtelaufbaustreifen weggekrümmt sind, können mit den dargelegten Beschränkungen und Risiken noch bedingt ausgerichtet werden. Spitzen, die jedoch nach axial innen zum Gürtelaufbaustreifen hin gekrümmt ausgebildet sind, sind hierdurch nicht ausrichtbar. Bereits der erste Hebelarm kommt mit der Seitenkante entweder nicht in Berührung oder er wird soweit verschwenkt, daß er die Spitze noch weiter nach innen biegt. Der zweite Hebelarm schwenkt anschließend nach innen und drückt unmittelbar auf das nach innen gebogene Ende der Spitze und quetscht den Endbereich der Spitze endgültig zusammen. Die Gefahr, daß die ursprüngliche Verkrümmung noch verstärkt und möglicherweise irreparabel zusammengedrückt wird, ist bei derartigen Verkrümmungen mit einer Vorrichtung gemäß US 4 769 104 nicht auszuschließen.

Die Vorrichtung gemäß der US 4 769 104 ermöglicht somit eine beschränkte Ausrichtung von Seitenkanten im Bereich des Hauptteils eines Gürtelaufbaustreifens und eine beschränkte Ausrichtbarkeit der Vorderkante des Gürtelaufbaustreifens.

Eine bestimmte vorgegebene Kontur der Seitenkante bzw. einer Spitze des Gürtelaufbaustreifens ist hierdurch nicht einstellbar. Es ist es auch nicht möglich, spätere, nach der Ausrichtung aufgrund von Erfahrungswerten zu erwartende Verformungen durch gezielte Vorverformungen bei der Ausrichtung zu berücksichtigen, so daß bei Eintreten der späteren Verformungen sich diese mit den voreingestellten gegenwirkenden Verformungen ausgleichen und somit die gewünschte Form erzeugt wird.

Die Vorrichtung beinhaltet eine Vielzahl von einzelnen mechanischen Teilen mit jeweils einer eigenständigen mechanischen Einrichtung zur Ausrichtung der vorderen Spitze und einer Einrichtung zur eigenständigen Ausrichtung der hinteren Spitze sowie eigenständige mechanische Einrichtungen zur Bearbeitung des Hauptteils. Die Vielzahl der mechanischen seitlichen Krafteinwirkungen erhöhen darüber hinaus die Gefahr, daß durch seitlichen Reibkontakt zum Gürtelaufbaustreifen weitere ungewünschte Deformationen erst erzeugt werden.

Die Erfindung liegt daher die Aufgabe zugrunde, ein Verfahren und eine Vorrichtung der eingangs erwähnten Art zu schaffen, mit denen es ermöglicht wird, einen Gürtelaufbaustreifen einer Weiterverarbeitungseinrichtung, insbesondere einer Gürtelaufbautrommel, so zuzuführen, daß der Aufbaustreifen sicherer verarbeitbar ist und die Qualität des Gürtels im Fahrzeugluftreifen verbessert wird.

Die Aufgabe wird erfindungsgemäß durch das Verfahren gemäß den Merkmalen von Anspruch 1 sowie durch die Vorrichtung gemäß den Merkmalen von Anspruch 10 gelöst. Die seitliche Ausrichtung ohne seitlichen Anschlag reduziert die Gefahr von seitlichen Krafteinwirkungen auf die Seitenkante und somit die Gefahr vonungewünschten Deformationen. Außerdem wird hierdurch die Gefahr des Enstehens von Materialansammlungen im Seitenkantenbereich, wie sie von mechanischen Anschlägen erzeugt werden, weitgehend vermieden. Ein einfaches Verlagern der Unregelmäßigkeiten im Seitenkantenverlauf auf Unregelmäßigkeiten im Dickenverlauf der Seitenkante und somit entstehende Einförmigkeitsproblemen des Reifens entfällt. Durch den ersten Verfahrensschritt, bei dem zunächst die vordere Spitze des Gürtelaufbaustreifens hinsichtlich seiner Form und seiner seitlichen Position ausgerichtet wird, und durch den dritten Verfahrensschritt, bei dem die rückwärtige Spitze des Gürtelaufbaustreifens hinsichtlich seiner Formgebung und seiner seitlichen Position ausgerichtet wird, wird gewährleistet, daß vordere und hintere Spitze sowohl seitlich positioniert als auch ausgeformt werden. Der dazwischen liegende zweite Verfahrensschritt stellt sicher, daß auch das Hauptteil hinsichtlich seiner seitlichen Position ausgerichtet wird. Der Verfahrensablauf ermöglicht dabei zunächst eine Ausrichtung des vorderen Teils und dann entsprechend der Reihenfolge in Förderrichtung in Übereinstimmung mit der bereits ausgerichteten Position des Vorderkantenteils zunächst eine abgestimmte Ausrichtung des Hauptteils und im Anschluß daran eine darauf abgestimmte Ausrichtung des hinteren Teils. Durch Ausrichtung sowohl der Form als auch der Seitenposition von Vorder- und Hinterkante wird gewährleistet, daß die Vorderkante und die Hinterkante zur weiteren Verarbeitung sowohl die gewünschte seitliche Position als auch die gewünschte vordere und hintere Kontur erhält. Die Weiterverarbeitbarkeit wird hierdurch verbessert.

Zur Verarbeitung auf einer Gürtelaufbautrommel wird hierdurch die Verspleißbarkeit verbessert. Bei der Gürtelaufbautrommel wird gewährleistet, daß Vorder- und Hinterkante funktionssicher miteinander verspleißt werden können , wobei das Hauptteil ebenfalls ausgerichtet ist. Die Qualität des Gürtels im Fahrzeugluftreifen wird hierdurch verbessert.

Der Verfahrensablauf in den drei Schritten ermöglicht eine Ausrichtung entsprechend den unterschiedlichen Erfordernissen für die Spitzen und das Hauptteil, und zwar entsprechend dem Förderablauf, d.h. zunächst wird das vordere Teil, dann das Hauptteil, dann das hintere Teil ausgerichtet.

Das Verfahren gemäß den Merkmalen von Anspruch 2 ermöglicht während der gesamten Förderung, solange sich Gürtelaufbaustreifenmaterial im Erfassungsbereich der Sensoren befindet, ein genaues Ermitteln der Ist-Position der im Erfassungsbereich befindlichen Seitenkantenabschnitte, einen Vergleich mit Sollwerten für die Lage des in Förderrichtung gesehenen Abschnitts des Gürtelaufbaustreifens, der sich im Erfassungsbereich der Sensoren befindet und durch entsprechende Nachregelung der Seitenkantenposition in Abhängigkeit von den ermittelten Abweichungen von Ist- und Sollwerten eine individuelle Ausrichtung entsprechend den über die Länge des Gürtelaufbaustreifens unterschiedlichen Anforderungen.

Das Verfahren gemäß den Merkmalen von Anspruch 3 ermöglicht eine zuverlässige, einfache Ausrichtung des Gürtelaufbaustreifens im Förderbereich. Hierdurch wird erreicht, daß durch die Seitenkantenbezogene Ausrichtung der vorderen Spitze sowie der hinteren Spitze die vordere und die hintere Spitze zum Weiterverarbeiten den eigentlichen Anforderungen an eine möglichst genaue Weiterverarbeitung entsprechend in ihrer Seitenkantenposition und in ihrer Form der für die Weiterverarbeitung gewünschten seitlichen Postion angepaßt werden, so daß beispielsweise beim Spleißen auf einer Gürtelaufbautrommel seitlicher Versatz des vorderen und des hinteren Kantenbereichs weitgehend ausgeschlossen werden kann. Da die Deformation ohne seitliche mechanische Anschläge erfolgt, erfolgt eine vergleichmäßigtere Ausrichtung, so daß auch die Vorderkante bzw. die Hinterkante vergleichmäßigt wird. Das zwischen vorderer und hinterer Spitze befindliche Hauptteil wird entsprechend den Erfordernissen des Gürtelaufbaustreifens im Fahrzeugluftreifen ausgerichtet. Im Gegensatz zur reinen beiderseitigen Ausrichtung der Seitenkanten mit mechanischen Führungen, die unsymmetrische Verteilungen des Cordmaterials zur Äquatorebene im Fahrzeugluftreifen bewirken können, wird durch die seitliche mittensymmetrische Ausrichtung erreicht, daß das Stahlcordmaterial im Fahrzeugluftreifen weitgehend symmetrisch zur Äquatorebene verteilt ist. Die Fahreigenschaften und die Zuverlässigkeit des Fahrzeugluftreifens werden hierdurch verbessert.

Das Verfahren gemäß den Merkmalen von Anspruch 4 stellt ein bevorzugtes Verfahren zur Ausrichtung der vorderen Spitze dar, bei der die einzelnen Teile der Spitze entsprechend der Förderbewegung in ihrer Position in Förderrichtung nacheinander behandelt werden. Nach seitlicher Ausrichtung des vorderen Endes der vorderen Spitze ist die seitliche Position der Spitze für die spätere Verspleißbarkeit eingestellt. Bei unveränderter Seitenkantenposition dieses vorderen Spitzenendes wird nun die Spitze mit ihrem nachgeordneten Bereich verschoben, so daß die Seitenkantenlage der vorderen Spitzen in dem dem vorderen Ende nachgeordneten Spitzenbereich in ihrer Winkellage um das Spitzenende verschwenkt wird. Die Verschwenkung erfolgt solange, bis die Seitenkante der vorderen Spitze die Sollposition der Seitenkante der vorderen Spitze einnimmt. Auf diese Weise wird einfach nicht nur das Ende der Spitze seitlich exakt zur Weiterverarbeitung positioniert, sondern durch die Verdrehbewegung um das Spitzenende wird die Spitze in ihre Sollform deformiert. Dabei wird die gesamte Spitze um das Ende seitlich verschwenkt, so daß auch die Vorderkante die Deformation und somit die Ausrichtebewegung mitmacht. Die Vorderkante wird auf diese Weise in ihrem Verlauf vergleichmäßigt, so daß die Verspleißbarkeit verbessert wird.

Das Verfahren gemäß den Merkmalen von Anspruch 5 stellt ein bevorzugtes Verfahren zur Ausrichtung eines Gürtelaufbaustreifens dar. Der Reihenfolge der einzelnen Abschnitten in Förderrichtung entsprechend wird der Gürtelstreifen zunächst soweit gefördert, bis das vordere Ende der vorderen Spitze von einem Sensor erfaßt wird. Danach wird der Gürtelaufbaustreifen seitlich soweit verschoben, bis das vordere Ende in die Ausrichtposition gelangt. Danach wird ein Sicherungskontakt zwischen vorderer Spitze und zweitem Fördermittel hergestellt, so daß sich das vordere Ende beim anschließenden Verschieben des ersten Fördermittels nicht seitlich verschiebt. Durch das anschließende seitliche Verschieben des ersten Fördermittels wird die vordere Spitze um das gesicherte Ende geschwenkt, bis die Seitenkante der vorderen Spitze ihre Sollposition erreicht, die sie auch im folgenden beibehält. Der Hauptteil wird durch Erfassen beider Seitenkanten während der Förderung des Hauptteils durch die Sensoreinrichtung derart ausgerichtet, daß die beiden Seitenkantenverläufe im wesentlichen symmetrisch zu einer in Förderrichtung verlaufenden Achse sind. Hierdurch wird erreicht, daß die beiden Seitenkantenverläufe zwar Unregelmäßigkeiten aufweisen können, die beiden Unregelmäßigkeiten jedoch an beiden Seitenkanten im wesentlichen symmetrisch zu einer in Förderrichtung verlaufenden Achse sind und somit das Stahlcordmaterial im wesentlichen symmetrisch zu dieser Achse verteilt ist. Ohne Veränderung der so ausgerichteten Lage des Hauptteils wird im Anschluß daran die hintere Spitze ausgerichtet. Auf diese Weise können mit einer einzigen Sensoreinrichtung, die lediglich an einer Position im Bereich zwischen zwei Fördermitteln eingerichtet ist und durch einfach gesteuerte Verschiebung lediglich des ersten Fördermittels baulich einfach mit vergleichsweise wenigen Bauteilen vordere Spitze und Hauptteil und hintere Spitze entsprechend den jeweiligen Erfordernissen an diese drei Abschnitte des Gürtelaufbaustreifens ausgerichtet werden.

Lediglich das erste Fördermittel muß seitlich gesteuert verschiebbar ausgebildet werden. Weitere zusätzliche auf den Gürtelaufbaustreifen zur seitlichen Ausrichtung einwirkende Bauteile sind nicht erforderlich. Aufwand für Herstellung, Wartung, Montage und Fehlersuche für diese weiteren Bauteile ist nicht erforderlich. Mit einer einzigen Sensoreinrichtung, die zwischen beiden Fördermitteln angeordnet ist, können alle erforderlichen seitlichen Ausrichtevorgänge erfaßt und gesteuert werden.

Das Verfahren gemäß den Merkmalen von Anspruch 6 ermöglicht darüber hinaus, daß in ebenso einfacher Weise ohne zusätzliche Einrichtungen auch die hintere Spitze zuverlässig ausgerichtet wird. Sobald die hintere Spitze im Einflußbereich der Sensoren ist, wird diese gegenüber den am zweiten Fördermittel gegen seitliches Verschieben gehaltenen vorgeordneten bereits ausgerichteten Bereichen des Gürtelaufbaustreifens seitlich verschoben, so daß die Seitenkante der hinteren Spitze in ihrer Winkellage gegenüber den gehaltenen Bereichen des Gürtelaufbaustreifens verschwenkt wird. Die seitliche Verschiebung erfolgt so lange, bis die Seitenkante des hinteren Endes des Gürtelaufbaustreifens ihrer Sollposition entspricht. Somit ist auch die hintere Spitze den Erfordernissen an die Weiterverarbeitung, insbesondere auf einer Gürtelaufbautrommel optimal ausgerichtet. Die Seitenkante der hinteren Spitze entspricht der Sollposition für die Seitenkante der hinteren Spitze, so daß seitlicher Versatz der hinteren Spitze gegenüber einer Sollposition in der Weiterverarbeitungseinrichtung verhindert wird. Durch die seitliche Ausrichtung durch die seitliche Mitnahme durch das erste Fördermittel ohne seitliche Anschläge bei gegen seitliches Verschieben gehaltenen vorangegangenem Gürtelaufbaustreifenbereich wird die gesamte hintere Spitze in ihrer Form ausgerichtet und somit auch die hintere Kante in ihrem Verlauf vergleichmäßigt. Die hintere Kante ist somit besser verspleißbar.

Durch das Verfahren gemäß den Merkmalen von Anspruch 7 wird es ermöglicht, daß auch aus Erfahrung bekannte Deformationen bei Weiterverarbeitungen, die vor Auflage des Gürtels auf die Gürteltrommel oder bei der Auflage des Gürtelaufbaustreifens auf den Gürtelauftrommeln oder durch die weitere Förderung zur Weiterverarbeitungseinrichtung bzw. zur Gürtelaufbautrommel nach der Ausrichtung erfolgen und den Gürtelaufbaustreifen in seiner Ausrichtequalität wieder verschlechtern würden bereits bei der Ausrichtung berücksichtigt werden. Die Ausrichtung ohne festgelegte seitliche Anschlagskonturen ermöglicht ein einfaches Verändern der durch die Ausrichtung erzielten seitlichen Soll-Kontur der vorderen bzw. hinteren Spitze. Entsprechend den zu erwartenden Deformationen wird die vordere Spitze bzw. die hintere Spitze in für die entsprechenden Anwendungsfälle in die Gegenrichtung der zu erwartenden Deformation, um das Maß der zu erwartenden Deformation vordeformiert ausgerichtet.

Bei Eintritt der im weiteren Verlauf der Förderung oder Weiterverarbeitung oder beim Auflegen auf den Gürtel erwarteten Deformation überlagert sich diese Deformation mit der durch die Ausrichtung voreingestellten Deformation. Die Vorderkante bzw. die Hinterkante wird hierdurch im aufgelegten Zustand auf der Gürtelaufbautrommel hinsichtlich der Qualität ihrer Seitenkantenposition bzw. ihrer Form verbessert.

Bevorzugt ist das Verfahren gemäß den Merkmalen von Anspruch 8. Ohne weitere Zwischenschritte wird hierdurch ermöglicht, daß in einer einzigen Arbeitsstation der Gürtelaufbaustreifen vom Gürtelbandmaterial geschnitten, direkt ausgerichtet und zur Weiterverarbeitungseinrichtung gefördert wird. Besonders vorteilhaft ist das Verfahren, wenn die Länge des abzuschneidenden Gürtelaufbaustreifens durch Sensoren zurErfassung der Vorderkante des Gürtelaufbaustreifens im Bereich des zweiten nachgeordneten Fördermittels erfaßt wird. Hierdurch wird unmittelbar nach Herstellung eines ausgerichteten Gürtelaufbaustreifens auch direkt die zugeschnittene Länge überprüft, wodurch frühzeitig unzulässige Längenabweichungen festgestellt werden können. Überraschungen derart, daß nach Auflegen des Gürtelaufbaustreifens auf die Gürtelaufbautrommel erkannt wird, daß Abstände zwischen Vorder- und Hinterkante des Gürtelaufbaustreifens auf der Gürteltrommel ein Spleißen nicht ermöglichen, werden hierdurch weitgehend vermieden.

Besonders vorteilhaft ist das Verfahren gemäß den Merkmalen von Anspruch 9, bei dem für einen auf einen geförderten Gürtelaufbaustreifen nachfolgend geförderten Gürtelaufbaustreifen die bei der Einstellung des zuvor geförderten Gürtelaufbaustreifens erzielte Ist-Seitenkantenpositionen als Sollwerte herangezogen werden. Da hierdurch als Referenzwerte für die einzustellende Sollposition bereits unmittelbar zuvor mit guter Qualität eingestellte Werte herangezogen werden, wird die Qualität der aufeinanderfolgend produzierten und ausgerichteten Gürtelaufbaustreifen weiter vergleichmäßigt. Bei Beginn einer Gürtelaufbaustreifenproduktion und - Förderung wird der erste Gürtelstreifen auf Erfahrungswerten basierenden Referenzwerten für die Seitenkantensollpositionen ausgerichtet. Für die nachfolgend geförderten Gürtelaufbaustreifen werden die aufgrund der bei der Ausrichtung des jeweils vorangegangenen Gürtelaufbaustreifens wirklich erzielten Ist-Seitenkantenpositionen als Referenzwerte für die Sollkantenposition herangezogen.

Die Vorrichtung zur Förderung und zum Aufbereiten eines Gürtelaufbaustreifens gemäß den Merkmalen von Anspruch 10 ermöglicht in einfacher Weise eine zuverlässige Ausrichtung eines Gürtelaufbaustreifens in den drei in Förderrichtung nachfolgenden Aufbaustreifenbereichen, nämlich der vorderen Spitze, dem Hauptteil und der hinteren Spitze, in Abhängigkeit für die in diesen drei Bauteilen zur Ausrichtung Jeweils erforderlichen wesentlichen Kriterien. Die zwei hintereinander angeordneten Fördermittel, von denen die in Förderrichtung vorgeordnete seitlich gesteuert verschiebbar ausgebildet ist, ermöglichen die Förderung in Förderrichtung und die seitliche Verschiebung des mit dem hinteren Fördermittel in Förderverbindung stehenden hinteren Bereichs des Gürtelaufbaustreifens gegenüber den mit in Förderrichtung nachgeordneten zweiten Fördermittel in Förderverbindung stehenden bereits ausgerichteten Teilen des Gürtelaufbaustreifens, wobei das Maß der seitlichen Verschiebung des ersten Fördermittels zur seitlichen Ausrichtung in Abhängigkeit von der durch die Sensoreinrichtung zwischen den beiden Fördermitteln ermittelten Positionen der Seitenkanten des Gürtelaufbaustreifens ermittelt und das erste Fördermittel entsprechend diesem Maß zur seitlichen Verschiebung seitlich verstellt wird. Die Mittel zum gesteuerten Halten der vorderen Spitze des Gürtelaufbaustreifens im Bereich des zweiten Fördermittels ermöglichen dabei die noch mit geringem seitlichen Kontakt mit dem zweiten Fördermittel in Berührung stehende vordere Spitze gegen seitliches Verschieben zu sichern. Die Kupplung der Sensoreinrichtung, der Antriebsmittel und der Mittel zum gesteuerten Halten derart, daß durch seitliche Verschiebung des in Förderrichtung vorgeordneten Fördermittels gegenüber dem nachgeordneten Fördermittel in einem ersten Schritt die in Förderrichtung vordere Spitze des Gürtelaufbaustreifens in seiner Formgebung und Position ausgerichtet werden, daß in einem zweiten Schritt das Hauptteil des Gürtelaufbaustreifens in seiner Formgebung und seiner seitlichen Position symmetrisch ausgerichtet wird und das in einem dritten Schritt die hintere in Gegenförderrichtung weisende Spitze hinsichtlich ihrer Formgebung und in ihrer seitlichen Position ausgerichtet wird, ermöglicht es ohne Verändern der Förderrichtung lediglich mit Hilfe der seitlichen Verschiebung des vorgeordneten Fördermittels in Abhängigkeit von der durch die Sensoreinrichtung ermittelten Werte für die Seitenkanten zunächst die in Förderrichtung vordere Spitze des Gürtelaufbaustreifens hinsichtlich seiner Seitenkante und seiner Form auszurichten, so daß diese den Erfordernissen an eine genaue Weiterverarbeitung insbesondere an ein Verspleißen in einer Gürtelaufbautrommel gerecht wird, darüber hinaus im Anschluß daran das Hauptteil so auszurichten, daß es optimiert für den Einsatz im Fahrzeugluftreifen mit gegenüber der Äquatorebene symmetrischer Cordverteilung ausgebildet ist, und im Anschluß daran die hintere Spitze so auszurichten, daß sie wiederum den zur Weiterverarbeitung insbesondere auf der Gürtelaufbautrommel erforderlichen Ausrichtung in Position und Form gerecht wird.

Die Erfindung wird im folgenden anhand der in den Figuren 1 und 2a bis i dargestellten Ausführungsbeispielen näher erläutert. Hierin zeigen:
- Fig. 1: schematische Seitenansicht einer erfindungsgemäßen Förder- und Ausrichteeinrichtung,
- Fig. 2a bis 2i: erfindungsgemäßer Ablauf der Förderung und Ausrichtung von Gürtelaufbaustreifen in schematischer Draufsicht auf die erfindungsgemäße Förder- und Ausrichteeinrichtung

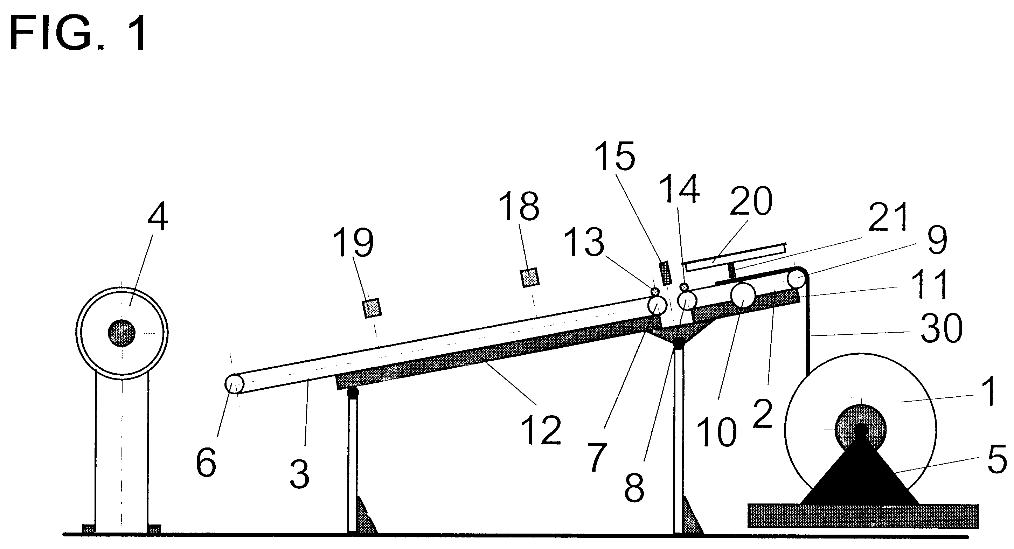

In Fig. 1 ist ein Fördertisch dargestellt, über den von einer in einem Gestell 5 drehbar gelagerten Gürtelaufbaubandspeicherrolle ein kontinuierliches Gürtelaufbauband 30 über ein erstes umlaufendes Förderband 2 gefördert wird. Auf dem umlaufenden Förderband 2 werden Gürtelaufbaustreifen 35 mit Hilfe eines Messers 21 einer Trennvorrichtung bekannter Art abgeschnitten. Die Gürtelaufbaustreifen 31 werden über das erste umlaufende Förderband 2 und über ein zweites in Förderrichtung nachgeordnetes umlaufendes Förderband 3 zu einer Gürtelaufbautrommel bekannter Art gefördert und in bekannter Weise auf die Gürtelaufbautrommel zum Aufbauen des Gürtels eines Fahrzeugluftreifens aufgelegt.Das umlaufende Förderband 2 ist um die Umlenkrollen 8 und 9 umlaufend ausgebildet, wobei die umlaufenden Förderrollen 8 und 9 mit ihren zueinander parallelen und quer zur Förderrichtung ausgerichteten Wellen in der Tischplatte 11 des Fördertischs drehbar gelagert sind. Eine der beiden Wellen der Umlenkrollen 8 und 9 wird in bekannter Weise von einem nicht dargestellten, gesteuerten Antriebsmotor rotatorisch zur Förderung angetrieben. Die Tischplatte 11 ist quer zur Förderrichtung im Fördertisch verschiebbar gelagert. Mit Hilfe eines Stellantriebs 10 bekannter Art, der beispielsweise eine von einem Stellmotor getriebene Stellspindel sein kann, kann die Tischplatte 11 und somit das umlaufende Fördermittel 2 in seiner seitlichen Position gesteuert verändert werden.

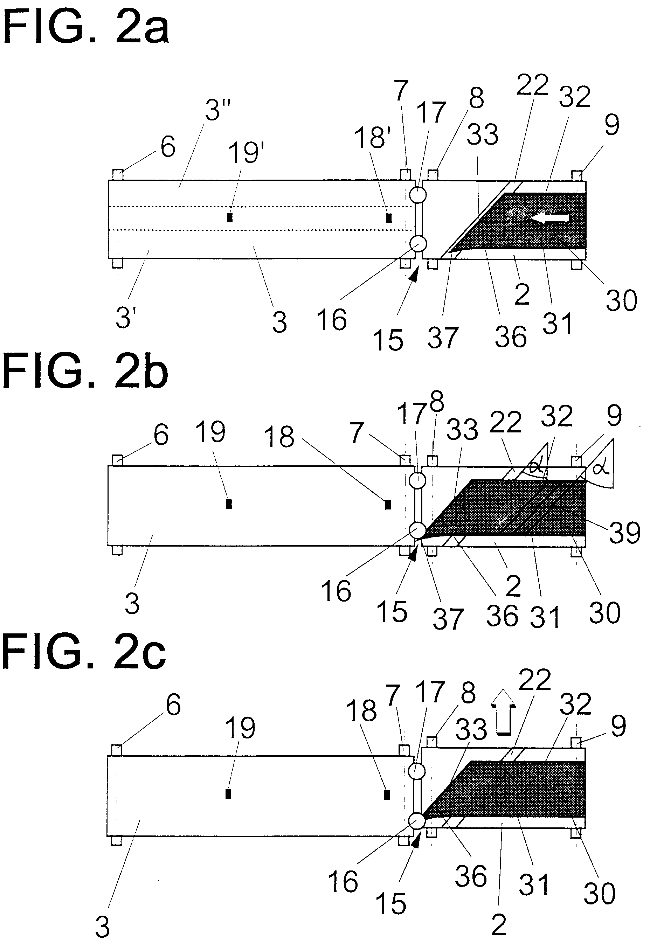

Das umlaufende Förderband 3 ist um Umlenkrollen 7 und 6 umlaufend ausgebildet, wobei die Umlenkrollen 6 bzw. 7 mit ihren parallelen quer zur Förderichtung ausgerichteten Wellen drehbar in einer Tischplatte 12 des Fördertischs gelagert sind. Eine der beiden Wellen der Umlenkrollen 6 bzw. 7, beispielsweise die der Umlenkrolle 6 steht in Antriebsverbindung zu einem gesteuerten Antriebsmotor. Zwischen den beiden umlaufenden Förderbändern 2 und 3 ist eine Sensoreinrichtung 15 mit zwei Sensoren 16 und 17 ausgebildet, die mit gleichem seitlichem Abstand zur Bandmitte des umlaufenden Förderbandes 3 oberhalb der Förderebene angeordnet sind. Die Sensoren 17 und 16 stehen mit einer Steuereinheit zur Steuerung des Stellantriebs 10 in bekannter Weise in Verbindung. Die Sensoren 16 und 17 sind beispielsweise CCD-Kameras zur Erfassung der seitlichen Bahnkanten 31 und 32 des Gürtelaufbaumaterials. Im Bereich des in Förderrichtung nachgeordneten, zweiten umlaufenden Förderbandes 3 sind zwei hintereinander angeordnete Sensorsysteme 18 bzw. 19 bekannter Art zur Erfassung der Vorderkante des gefördeten Gürtelaufbaumaterials angeordnet. Diese können beispielsweise wie in Fig. 1 dargestellt ist oberhalb der Förderebene, z.B. als CCD-Kameras oder als Lichtschranken ausgebildet sein. Es ist auch denkbar, das zweite umlaufende Fördermittel aus zwei parallelen um die Umlenkwalzenrollen 6 und 7 umlaufend geführten Förderbändern 3''' und 3'' auszubilden, wie in Fig. 2a gestrichelt dargestellt ist. In diesem Fall ist es denkbar zwischen den beiden umlaufenden Bändern 3' und 3'' unterhalb der Förderebene die Sensoren 18' und 19' auszubilden, die Teil von Lichtschranken sind und die bei Auflaufen der Vorderkante 33 des Gürtelaufbaumaterials das Vorhandensein der Vorderkante erkennen.

Das von der Gürtelbandspeicherrolle 1 abgewickelte und von dem ersten umlaufenden Förderband 2, auf dessen oberem Trumm in der Förderebene geförderte Gürtelaufbauband 30 ist ein in bekannter Weise hergestelltes Gürtelaufbauband, bei dem parallele Stahlcorde, von denen in Fig. 2b beispielhaft schematisch drei dargestellt sind, unter Einschluß eines spitzen Winkels α zwischen 10 und 35°, von beispielsweise 20°, zur Querrichtung des Förderbandes in Kautschuk eingebettet sind. Auf dem oberen Trumm des ersten umlaufenden Förderbandes 2 erstreckt sich quer zur Förderrichtung unter Einschluß eines spitzen Winkels α parallel zur Ausrichtung der Stahlcorde 39 eine Schneidleiste 22, über der parallel zur Ausrichtung der Schneideleiste 22 ein Rollmesser 21 bekannter Art der Trennvorrichtung 20 zum Schneiden bewegbar ausgebildet ist.

Die Schneidleiste 22 ist dabei so über dem umlaufenden Förderband 2 angeordnet, daß das Gürtelaufbauband 30 gefördert von dem umlaufenden Förderband 2 über die Schneideleiste 22 hinweggeschoben und wieder vom umlaufenden Förderband 2 weiter mitgenommen wird. Das Gürtelaufbauband 30 wird von den umlaufenden Fördermitteln 2 und 3 solange in Förderrichtung gefördert, bis der Gürtelaufbaubandstreifen 35 mit einer Länge, die der gewünschten Gürtelaufbaustreifenlänge zum Aufbau einer Gürtellage des Gürtels auf der Gürtelaufbautrommel 4 entspricht, die Schneideleiste 22 passiert hat. Die Förderung wird gestoppt und das Rollmesser 21 wird unter dem Winkel α auf der Schneideleiste 22 quer über das Förderband 2 gerollt, so daß ein Gürtelaufbaustreifen 35 vom Gürtelaufbauband 30 abgeschnitten wird. Hierdurch erhält der abgeschnittene Gürtelaufbaustreifen 35 seine schräge Hinterkante 34 und das Gürtelaufbauband 30 und somit der nächste Gürtelaufbaustreifen seine schräge Vorderkante 33. Durch die Schnittbewegung, die parallel zur Ausrichtung der Stahlcorde unter dem Winkel α erfolgte, können die vordere Spitze 36 des nachfolgenden Gürtelaufbaubandes sowie die hintere Spitze 38 des vorangegangenen Gürtelaufbaustreifens verkrümmt werden. Vorderkante 33 und Hinterkante 34 sind dann ebenso wie die beiden Seitenkanten 31 und 32 im Bereich der Spitzen 36 und 38 spätestens nach dem Schnitt stark verkrümmt. Die Seitenkanten 31 und 32 des Gürtelaufbaubandes 30 bzw. des abgeschnittenen Gürtelaufbaustreifens 35 weisen darüber hinaus üblicherweise herstellungsbedingte, lagerungsbedingte und/oder durch die Förderung bis zum ersten umlaufenden Förderband 2 bedingte zueinander ungleiche Unregelmäßigkeiten im Kantenverlauf auf.

Im Verfahren zur weiteren Förderung und zur Ausrichtung der beiden Seitenkanten 31 und 32 und der Vorderkante 33 werden die Förderbänder 2 und 3, wie in den Fig. 2a bis 2i dargestellt ist, betrieben. Fig. 2a zeigt dabei die Ausgangsposition, bei der das Gürtelaufbauband 30 mit seiner auf der Schneideleiste 22 durch die Trennvorrichtung 20 erzeugten Vorderkante 33 aufliegt. Der Schnitt erfolgte bei angehaltenem Förderband 2. Das Gürtelaufbausband 30 wird nun, wie durch die Pfeildarstellung von Fig. 2a dargestellt ist, durch das umlaufende Förderband 2 in Förderrichtung solange gefördert, bis der vordere Endbereich 37 der vorderen Spitze 36 von dem Seitenkantensensor 16 erfaßt wird.

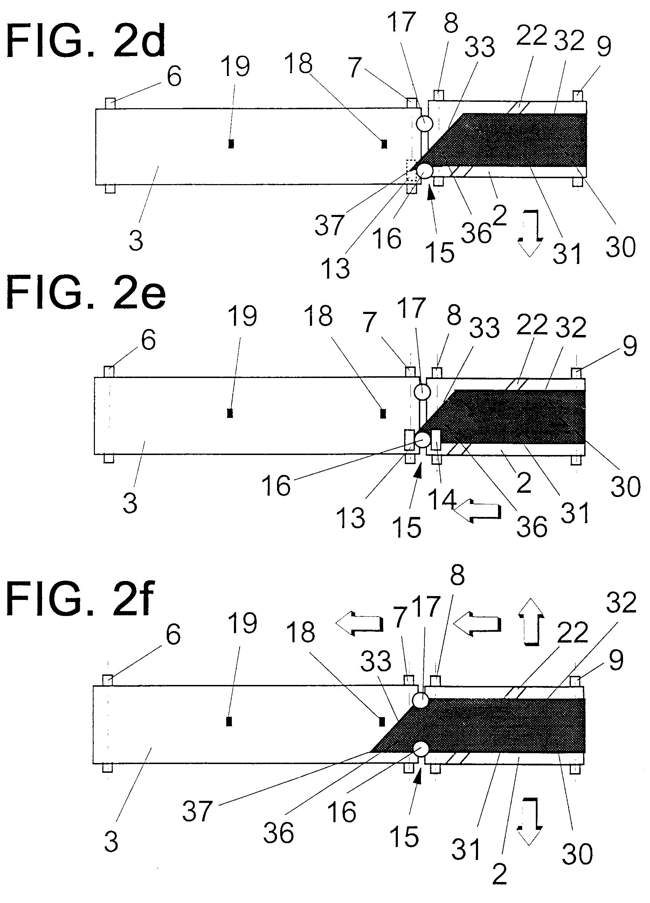

Das Förderband 2 wird gestoppt. Diesen Zustand zeigt Fig. 2b. Die nichtdargestellte Steuereinrichtung zur Steuerung des Stellantriebs 10 verschiebt den Fördertisch 11 soweit, bis die vom Seitenkantensensor 16 gemessene Position der Seitenkante 31 der vorderen Spitze 37 einem vorgegebenen Sollwert für die Seitenkantenposition der Seitenkante 31 entspricht. Dieser Zustand ist in Fig. 2c dargestellt. Danach wird das Gürtelaufbauband 30 mit Hilfe des Förderbandes 2 in unveränderter seitlicher Position des Förderbandes 2 soweit in Förderrichtung gefördert bis die Spitze 37 in den Einflußbereich einer parallel zur Umlenkrolle 7 oberhalb des Förderbandes 3 drehbar gelagerten gesteuert auf- und abschwenkbaren Auflagerolle 13 gelangt. Dieser Zustand ist in Fig. 2d dargestellt. Die Auflagerolle 13 wird abgesenkt, so daß sie die Reibkraft, die zwischen oberem Trumm des zweiten Förderbandes 3 und der darauf liegenden Spitze 17 wirkt, unterstützt, ein Fördern in Förderrichtung ermöglicht und ein seitliches Verschieben der Spitze 17 gegenüber dem oberen Trumm des Förderbandes 3 verhindert.

Danach wird der Fördertisch 11 mit Hilfe des Stellantriebs 10 soweit seitlich in seiner Position verschoben, bis der von dem Seitenkantensensor 16 nun erfaßte Abschnitt der Seitenkante 31, der im Bereich der vorderen Spitze 36 jedoch in Förderrichtung dem vorderen Endbereich vorgeordnet ist, soweit um das gegen seitliches Verschieben gesicherte Ende der Spitze geschwenkt ist, daß er der der vorgegebenen Seitenkantenpostion für die Seitenkante 31 der vorderen Spitze 36 entspricht. Die vordere Spitze 36 ist nun seitlich ausgerichtet und auch in ihrer Form zu ihrer Sollform deformiert.

Zur Sicherung von Form und Ausrichtung der vorderen Spitze wird nun eine oberhalb der Umlenkrolle 8 des ersten Förderbandes 2 um eine Achse parallel zur Achse der Umlenkrolle 8 drehbar gelagerte Halterrolle 14 auf den zur Seitenkante 31 weisenden Seitenbereich der vorderen Spitze 36des Gürtelaufbaubandes 30 abgesenkt, so daß die Haftwirkung zwischen Förderband 2 und Gürtelaufbauband 30 verstärkt, eine Förderung in Förderrichtung ermöglicht und ein seitliches Verschieben der ausgerichteten Spitze 36 gegenüber dem Förderband 2 verhindert wird. Dieser Zustand ist in Fig. 2e dargestellt.

In Anschluß daran wird das Gürtelaufbauband 30 durch die synchronangetriebenen Förderbänder 2 und 3 solange gefördert, bis der Seitenkantensensor 17 die Seitenkante 32 des Gürtelaufbaubandes 30 erfaßt. Während dieser Förderung wird die Position der Seitenkanrte 31 vom Sensor 15 kontinuierlich erfaßt und der Tisch 11 entsprechend woweit verfahren, daß die Ist-Position der Seitenkante 31 im Bereich des Sensors 15 ihrer Soll-Position entspricht. Sobald die vordere Spitze 36 soweit auf das Förderband 3 bewegt wurde, daß die Haftreibung zwischen Förderband 3 und Gürtelaufbauband auch ohne Auflagerollen ausreicht, die seitliche Position des Gürtelaufbaubandes auf dem Förderband 3 zu sichern, werden die Auflagerollen 14 und 16 angehoben, so daß sie außer Kontakt mit dem Gürtelaufbauband kommen. Dieser Zustand ist in Fig. 2f dargestellt. Der Ausrichtemodus ist bis dahin zur Ausrichtung der vorderen Spitze lediglich ein Seitenkantenausrichtemodus, d.h. ein Modus, bei dem die Ausrichtung so erfolgt, daß die Seitenkante 31 der vorderen Spitze 36 eine vorgegebene Sollposition und einen vorgegebenen Sollverlauf einnimmt. Vom Seitenkantenausrichtemodus wird nun auf den Mittenbetriebsmodus umgeschaltet. Das Gürtelaufbauband 30 wird weiter durch die synchron angetriebenen Förderbänder 2 und 3 kontinuierlich gefördert, wobei der Seitenkantensensor 16 kontinuierlich die Position der zwischen den Förderbändern 2 und 3 unter der vorbeigeführten Seitenkante 31 erfaßt und der Seitenkantensensor 17 kontinuierlich die zwischen den beiden umlaufenden Förderbändern 2 und 3 unter ihm vorbeigeführten Seitenkante 32 erfaßt. Entsprechend den von beiden Seitenkantensensoren 16 und 17 jeweils ermittelten Meßwertenfür jede Längsposition des Gürtelaufbaubandes 30 wird jeweils die Breite des Gürtelaufbaubandes 30 an der jeweils von dem Sensorenpaar erfaßten Längsposition des Gürtelaufbaubandes 30 und aus der Breite die Mitte des Gürtelaufbaubandes an dieser Längsposition des Gürtelaufbaubandes ermittelt und mit einer vorgegebenen Sollposition für die Mitte des Gürtelaufbaubandes an dieser Längsposition verglichen. Entsprechend der ermittelten Abweichung von Sollposition der Mitte und gemessener Istposition der Breitenmitte wird der Stellantrieb 10 so gesteuert, daß er den Tisch jeweils um das Maß der Abweichung soweit verschiebt, daß die Sollmittenposition des Gürtelaufbaubandes in dieser Längsposition der Istposition entspricht. Auf diese Weise sind in dem der vorderen Spitze 36 nachgeordneten Hauptteil des Gürtelaufbaubandes, von dem beide Seitenkanten 31, 32 erfaßt wurden, die beiden Seitenkanten nach Ausrichtung zwar noch krummlinig, allerdings symmetrisch zur Mittenlinie des auf dem Förderband 2 weitergeförderten Gürtelaufbaubandes.

Sobald die Vorderkante 33 von dem ersten Längensensor 18 erfaßt wird, löst dieser einen Zählvorgang für die Materialtrennung aus. Das Gürtelaufbauband 30 wird weiterhin kontinuierlich im Betriebsmodus-Mittenführung gefördert. Entsprechend der gewünschten Länge des abzuschneidenden Gürtelaufbaustreifens 35 und der eingestellten Fördergeschwindigkeit der Förderbänder 2 und 3 und der Zählgeschwindigkeit wird so lang weitergefördert, bis der Zählvorgang so weit fortgeschritten ist, daß eine Zahl erreicht ist , die angibt, daß der Abstand von Vorderkante 33 zur Schnittlinie des Rollenmessers dem der gewünschten Länge des Gürtelaufbaustreifens 35 entspricht. Die Förderung wird gestoppt. Das Trennmesser 21 der Trennvorrichtung 20 wird abgesenkt und auf der Schneideleiste 22 parallel zur Ausrichtung der Schneideleiste 22 zum Abschneiden des Gürtelaufbaustreifens 35 vom Gürtelaufbauband 30entlanggerollt. Dabei erhält der Gürtelaufbaustreifen 35 seine hintere Kante 34, die mit der Seitenkante 32 des Gürtelaufbaustreifens 35 unter Einschluß eines spitzen Winkels die hintere Spitze 38 erzeugt. Spätestens durch den Schnittvorgang ist die hintere Spitze 38, die hintere Kante 34 und die Seitenkante 32 im Bereich der hinteren Spitze 38 häufig deformiert.

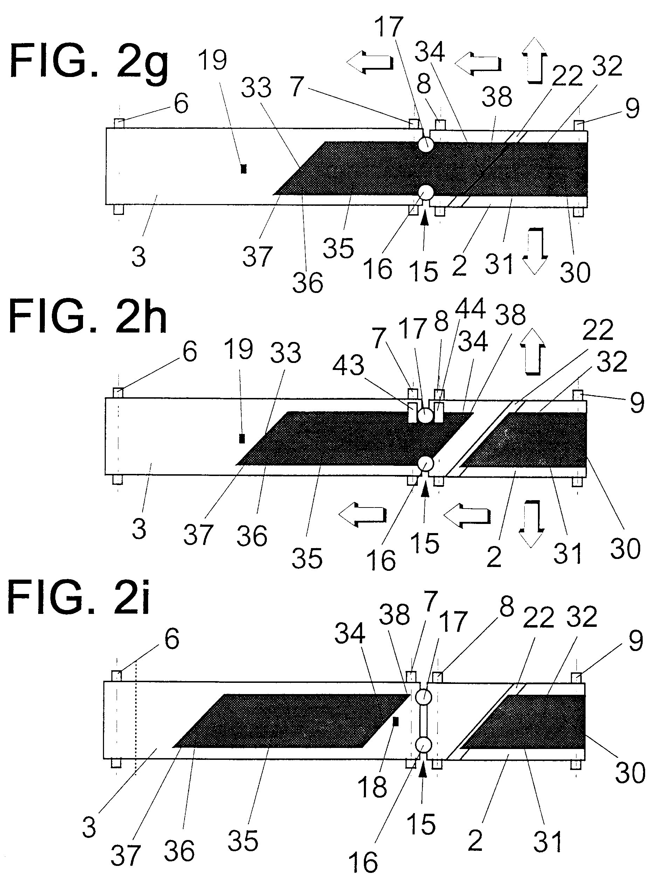

Fig. 2g zeigt das verbleibende Gürtelaufband 30 und den gerade abgeschnittenen Gürtelaufbaustreifen 35, jedoch vereinfacht ohne Darstellung der Verkrümmung. Nach Abschneiden des Gürtelaufbaustreifens 35 vom Gürtelaufbauband 30 wird der Gürtelaufbaustreifen 35 weiter in Förderrichtung durch die synchron angetriebenen Förderbänder 2 und 3 im Betriebsmodus-Mittenführung gefördert bis die Seitenkante 31 den Spalt zwischen den Förderbändern 2 und 3 und somit den Erfassungsbereich des Seitenkantensensors 16 verläßt.

Zwei gesteuerte anhebbare und absenkbare Auflagerollen 43, 44, die parallel zu den Umlenkrollen 7 bzw. 8 oberhalb der Jeweiligen Umlenkrolle 7 bzw. 8 angeordnet sind, werden auf den zur Seitenkante 32 des Gürtelaufbaustreifens 35 weisenden Gürtelaufbaustreifenseite zur Verstärkung des Reibkontaktes zwischen Gürtelaufbauband 35 und Förderband 2 und 3 zur Sicherung gegen seitliches Verschieben auf den Förderbändern im Bereich der Umlenkrollen 7 und 8 abgesenkt. Dieser Zustand ist in Fig. 2h dargestellt.

Der Ausrichtebetriebsmodus wird von Betriebsmodus-Mittenführung auf Betriebsmodus-Seitenkantenführung umgestellt. Der Gürtelaufbaustreifen 35 wird durch die Förderbänder 2 und 3 weiter in Förderrichtung gefördert. Dabei erfaßt der Sensor 17 kontinuierlich die Position der Seitenkante 32 der hinteren Spitze 38. In Abhängigkeit von derfür die jeweils ermittelte Seitenkantenposition an Jeder gemessenen Längsposition des Gürtelaufbaustreifens 35 wird während dieser Förderung der Tisch 11 durch das Stellmittel 10 jeweils so weit verschoben, daß die zwischen Umlenkrolle 7 und Auflagerolle 43 einerseits und Umlenkrolle 8 und Auflagerolle 44 andererseits in seitlicher Richtung gegen seitliches Verrutschen festgehaltene Seitenkante entgegen dem ermittelten Maß der Abweichung der Ist-Seitenkantenposition von der Soll-Seitenkantenposition verschoben und somit die Seitenkante 32 der hinteren Spitze 38 in ihre Sollkontur ausgerichtet und die Seitenspitze 38 in ihre Sollform deformiert ist. Sobald das hintere Ende der Spitze 38 den Spaltbereich zwischen den Förderbändern 2 und 3 und somit den Erfassungsbereich durch den Sensor 17 verlassen hat, ist der Ausrichtvorgang beendet. Die Auflagerollen 43 und 44 werden angehoben. Dieser Zustand ist in Fig. 2i dargestellt.

Es ist auch denkbar, die beiden Auflagerollen 43, 44 erst abzusenken, wenn der Gürtelaufbaustreifen 35 die Position von Fig. 2h verlassen hat, soweit noch ausreichend Haftreibung zwischen Gürtelaufbaustreifen 35 und Förderband 2 besteht, um ein seitliches Verschieben der hinteren Spitze gegenüber dem Förderband 2 zu verhindern.

Zur zusätzlichen Überprüfung der abgeschnittenen Länge des Gürtelaufbaustreifens 35 ist ein weiterer Vorderkantensensor 19 ausgebildet. Sobald der Vorderkantensensor 19 die Vorderkante 33 erfaßt, beginnt ein erneuter Zählvorgang, der in dem Moment endet, an dem die Hinterkante 34 den Vorderkantensensor 18 passiert. Durch Vergleichen der hierfür erforderlichen Zähldauer in Abhängigkeit mit der Fördergeschwindigkeit und der Zählgeschwindigkeit wird überprüft, ob die gewünschte Länge eingestellt ist. Falls die Länge über ein vorgegebenes Toleranzmaß vom gewünschten Längenmaß abweicht, wird der geschnittene Gürtelaufbaustreifen entfernt. Ansonsten wird der Gürtelaufbaustreifen weiter in Richtung Gürtelaufbautrommel gefördert und direkt in derartig ausgerichteter Form aufgebaut.

Es ist auch denkbar, nach Erreichen des Zustands von Fig. 2d, in der die Spitze 37 zwischen Auflagerolle 13 und Umlenkrolle 7 gegen seitliches Verschieben gesichert ist zur Sicherung der Ausrichtbewegung der vorderen Spitze 36 zunächst auch die Auflagerolle 14 abzusenken, so daß die vordere Spitze auch zwischen Auflagerolle 14 und Umlenkrolle 8 gegen seitliches Verschieben gesichert ist und dann den Tisch 11 mit Hilfe der Stellmittel 10 soweit zu verschieben, bis die durch die in dieser Weise zwischen Umlenkrolle 7 und Auflagerolle 13 einerseits und Umlenkrolle 8 und Auflagerolle 14 andererseits eingespannte vordere Spitze mit ihrer Seitenkante in Sollposition der Seitenkante gelangt.

Es ist denkbar, die Seitenkante 31 der vorderen Spitze 36 bzw. die Seitenkante 32 der hinteren Spitze 38 so auszurichten, daß sie eine Gerade parallel zur Förderrichtung bildet. Es ist auch denkbar, die Seitenkante 31 der vorderen Spitze 36 bzw. die Seitenkante 32 der hinteren Spitze 38 so auszurichten, daß sie eine gezielte Abweichung von einer parallelen Geraden ergibt, mit der einer im weiteren Bearbeitungsprozess erwarteten Deformierung gezielt entgegengewirkt wird. Somit kann bei einer erwarteten Deformierung beispielsweise der Seitenkante 31 der vorderen Spitze 36 nach links in Förderrichtung durch entsprechende gezielte Ausrichtung dieser Seitenkante nach rechts so entgegengewirkt werden, daß das Gürtelaufbauband auf der Gürtelaufbautrommel die gewünschte geradlinige Ausrichtung erhält.

Bei Förderung von Gürtelaufbaustreifen 35, die bereits in ihrer Ausrichtung der Sollausrichtung entsprechen, entsprechen die von den Seitenkantensensoren 16, 17 gemessenen Seitenkantenpositionen bzw. die im Hauptteil ermittelten Breitenmitten den Sollverläufen. Ohne Ausrichtbewegung desFörderbandes 2 wird ein solcher Gürtelaufbaustreifen 35 zur Gürtelaufbautrommel 4 gefördert.

### Bezugszeichenliste

- 1: Gürtelbandspeicherrolle
- 2: umlaufendes Förderband
- 3: umlaufendes Förderband
- 4: Gürtelaufbautrommel
- 5: Gestell
- 6: Umlenkrolle
- 7: Umlenkrolle
- 8: Umlenkrolle
- 9: Umlenkrolle
- 10: Stellantrieb
- 11: Tisch
- 12: Tisch
- 13: Auflagerolle
- 14: Auflagerolle
- 15: Sensoreinrichtung
- 16: Seitenkantensensor
- 17: Seitenkantensensor
- 18: Vorderkantensensor
- 19: Vorderkantensensor
- 20: Trennvorrichtung
- 21: Messer
- 22: Schneideleiste
- 30: Gürtelaufbauband
- 31: Seitenkante
- 32: Seitenkante
- 33: Vorderkante
- 34: Hinterkante
- 35: Gürtelaufbaustreifen
- 36: vordere Spitze
- 37: Endbereich
- 38: hintere Spitze
- 39: Stahlcord
- 43: Auflagerolle
- 44: Auflagerolle

## Patentansprüche

1. Verfahren zum Transport eines Gürtelaufbaustreifens für den Aufbau eines Gürtels für einen Fahrzeugluftreifen mit parallelen schräg zur Förderrichtung verlaufend angeordneten in Kautschuk eingebetteten Festigkeitsträgern, insbesondere aus Stahl, zu einer nachgeordneten Weiterverarbeitungseinrichtung und zum Aufbereiten des Gürtelaufbaustreifens zur Weiterverarbeitung in der nachgeordneten Weiterverarbeitungseinrichtung, z.B. einer Gürtelaufbautrommel, wobei der Gürtelaufbaustreifen, der quer zur Förderrichtung zu beiden Seiten hin durch jeweils eine Seitenkante und an seiner vorderen in Förderrichtung und an seiner hinteren in Gegenförderrichtung gerichteten Seite durch eine Vorderkante bzw. durch eine Hinterkante begrenzt ist, die im wesentlichen parallel zu Festigkeisträgern schräg verlaufen, so daß die Vorderkante mit der einen Seitenkante und die Hinterkante mit der anderen Seitenkante jeweils unter Einschluß eines spitzen Winkels von insbesondere 10 bis 35° eine vordere Streifenspitze bzw. eine hintere Streifenspitze bildet, über wenigstens zwei in Förderrichtung hintereinander angeordnete, insbesondere umlaufende, Fördermittel zur Weiterverarbeitungseinrichtung gefördert wird und dabei jeweils ohne seitlichen Anschlag seitlich ausgerichtet wird,
- wobei zur seitlichen Ausrichtung in einem ersten Schritt die in Förderrichtung vordere Spitze des Gürtelaufbaustreifens hinsichtlich seiner Form und seiner seitlichen Position ausgerichtet wird,
- wobei in einem weiteren Verfahrensschritt das Hauptteil des Gürtelstreifens, das sich zwischen vorderer Spitze und hinterer Spitze befindet, hinsichtlich seiner seitlichen Position ausgerichtet wird, und
- wobei in einem dritten Verfahrensschritt die rückwärtige Spitze des Gürtelaufbaustreifens hinsichtlich seiner Formgebung und seiner seitlichen Position ausgerichtet wird.

2. Verfahren gemäß den Merkmalen von Anspruch 1, bei dem beiderseits des Gürtelstreifens Sensoren die Position der Gürtelkante erfassen und bei dem aufgrund der ermittelten Positionen der Seitenkanten die Nachregelung erfolgt.

3. Verfahren gemäß den Merkmalen von Anspruch 2,
- wobei zunächst der Sensor, der der vorderen Spitze am nächsten gelegen ist, die Seitenkantenposition der vorderen Spitze ermittelt und aufgrund dieser ermittelten Seitenkantenposition die Spitze so in ihrer Position ausgerichtet und deformiert wird, daß die den Gürtelstreifen begrenzende seitliche Kante im Bereich der vorderen Spitze einer seitlichen Sollkantenausrichtposition und -Kontur entspricht,
- bei der sodann beide Sensoren den Seitenkantenverlauf der beiden Seitenkanten des Hauptteils ermitteln und die Lage des Hauptteils so ausrichten, daß das Hauptteil an jeder Position in Förderrichtung im Verlauf seiner beiden Seitenkanten seitlich mittensymmetrisch zu einer Achse in Förderrichtung ausgerichtet wird und
- daß im Anschluß daran mit Hilfe des zweiten Sensors die Seitenkantenlage der Endspitze ermittelt wird und die Form und die seitliche Position der Endspitze so ausgerichtet wird, daß die seitliche den Gürtelstreifen begrenzende Seite der seitlichen Sollkantenausrichtposition und -Kontur entspricht.

4. Verfahren gemäß den Merkmalen von Anspruch 1, 2 oder 3,
- wobei die vordere Spitze zur Ausrichtung zunächst seitlich mit ihrem vorderen Ende in deren seitliche Sollausrichtposition verschoben wird und insbesondere dort gegen seitliches Verschieben gesichert wird und
- wobei anschließend bei unveränderter, insbesondere gegen seitliches Verschieben gesicherter, Seitenkantenposition des vorderen Spitzenendes, die Spitze soweit durch seitliches Verschieben von in Förderrichtung nachgeordnetenn Bereichen in der Winkellage ihrer Seitenkantenlage zur Förderrichtung verändert wird, daß die Seitenkante der Spitze den Sollwinkelverlauf einnimmt.

5. Verfahren gemäß den Merkmalen der Ansprüche 2, 3 oder 4,
- wobei der Gürtelaufbaustreifen vom ersten Fördermittel soweit gefördert wird, daß das vordere Ende der vorderen Spitze von einem Sensor zur Erfassung der Seitenkantenlage im Übergangsbereich zum zweiten Fördermittel erfaßt wird,
- wobei, insbesondere bei unterbrochener Förderung, der Gürtelaufbaustreifen seitlich soweit verschoben wird, bis die vom Sensor ermittelte Seitenkantenposition des vorderen Endes der Sollposition der Seitenkante des vorderen Endes entspricht,
- wobei danach der Gürtelaufbaustreifen soweit gefördert wird, daß Mitnahmekontakt durch das zweite Fördermittel hergestellt ist, und dann insbesondere die Förderung unterbrochen wird,
- wobei danach nach Herstellung eines sichernden Haltekontakts zwischen zweitem Fördermittel und vorderem Ende der vorderen Spitze gegen seitliches Verschieben der Gürtelaufbaustreifen durch das erste Fördermittel seitlich soweit verschoben wid, daß die vom Sensor ermittelte Seitenkantenposition der vorderen Spitze der vorgegebenen Sollposition entspricht,
- bei der danach der Gürtelaufbaustreifen weiter gefördert wird, bis auch die zweite Seitenkante des Gürtelaufbaustreifens von einem Sensor zur Erfassung der Seitenkantenlage im Übergangsbereich zum zweiten Fördermittel erfaßt wird,
- bei der danach der Gürtelstreifen weitergefördert wird, wobei während der Förderung das erste Fördermittel in Abhängigkeit von der während der Förderung ermittelten seitlichen Ist- Positionen der beiden Seitenkanten so gesteuert seitlich verschoben wird, daß die Seitenkantenverläufe jeweils im wesentlichen symmetrisch zu einer in Förderrichtung verlaufenden Achse sind,
- und bei der, sobald der Gürtelaufbaustreifen soweit gefördert ist, daß eine Seitenkante in Förderrichtung den Sensorenerfassungsbereich verläßt, die hintere Spitze ausgerichtet wird.

6. Verfahren gemäß den Merkmalen von Anspruch 5,
- wobei zur Sicherung des Haltekontaktes zwischen Gürtelaufbaustreifen und zweitem Fördermittel im Bereich des zweiten Fördermittels eine Auflagerolle (13) auf die Spitze des Gürtelaufbaustreifens gesteuert abgesenkt wird,
- die vor der Ausrichtung des Hauptteils wieder angehoben wird.

7. Verfahren gemäß den Merkmalen von Anspruch 6,
- wobei zusätzlich zur Sicherung des Haltekontaktes zwischen Gürtelaufbaustreifen und erstem Fördermittel eine Auflagerolle (14) im Bereich des ersten Fördermittels auf die vordere Spitze gesteuert abgesenkt wird,
- die vor der Ausrichtung des Hauptteils wieder angehoben wird.

8. Verfahren gemäß den Merkmalen von Anspruch 5,
- wobei, nachdem eine Seitenkante in Förderrichtung den Sensorerfassungsbereich verlassen hat, in Abhängigkeit von der durch den Sensor zur Erfassung der Seitenkantenposition der anderen Seitenkante die hintere Spitze durch seitliches Verschieben des ersten Fördermittels gegenüber den am zweiten Fördermittel gegen seitliches Verschieben gehaltenen Gürtelaufbaustreifen soweit seitlich verschoben wird, daß die Seitenkante der hinteren Spitze des Gürtelaufbaustreifens der Sollposition entspricht.

9. Verfahren gemäß den Merkmalen von Anspruch 8,
- bei dem, nach dem das Hauptteil den Spaltbereich zwischen den Fördermitteln verlassen hat, Auflagerollen (43, 44) auf die hintere Spitze zur Sicherung des Haltekontaktes abgesenkt werden, wobei eine Auflagerolle im Bereich des ersten und eine im Bereich des zweiten Fördermittels abgesenkt wird, und bei dem, sobald das hintere Ende den Spalt zwischen den Fördermitteln verlassen hat, die Auflagerollen angehoben werden.

10. Verfahren gemäß den Merkmalen von einem oder mehreren der vorangegangenen Ansprüche,
- wobei die Seitenkantensollposition für die vordere Spitze und/oder für die hintere Spitze von einer Geraden in Förderrichtung um den Betrag der nach der Ausrichtung zu erwartenden späteren Seitenkantenverformung abweicht.

11. Verfahren gemäß den Merkmalen von einem oder mehreren der Ansprüche 1 bis 10,
- wobei der Gürtelaufbaustreifen auf dem ersten Fördermittel von einem Gürtelbandmaterial unter Herstellung der hinteren Kante des Gürtelaufbaustreifen abgeschnitten wird,
- wobei insbesondere die Länge des abzuschneidenden Gürtelaufbaustreifens mit einer Sollänge durch Sensoren zur Erfassung der Vorderkante des Gürtelaufbaustreifens im Bereich des zweiten, nachgeordneten Fördermittels, erfaßt wird und entsprechend der Erfassung der Gürtelaufbaustreifen nach Erreichen seiner Sollänge abgeschnitten wird.

12. Verfahren gemäß den Merkmalen von einem oder mehreren der Ansprüche 1 bis 11,
- bei dem für einen auf einen geförderten Gürtelaufbaustreifen nachfolgend geförderten Gürtelaufbaustreifen die bei der Einstellung des zuvor geförderten Gürtelaufbaustreifens erzielte Ist-Seitenkantenpositionen als Sollwerte herangezogen werden,
- bei dem insbesondere für einen ersten Gürtelaufbaustreifen als Sollwerte für die Sollkantenposition der beiden Spitzen Referenzwerte vorgegeben werden.

13. Vorrichtung zur Förderung und zum Aufbereiten eines Gürtelaufbaustreifens mit parallelen schräg zur Förderrichtung verlaufend angeordneten in Kautschuk eingebetteten Festigkeitsträgern, insbesondere aus Stahl, zur Weiterverarbeitung in einer nachgeordneten Weiterverarbeitungseinrichtung, insbesondere an einer Gürtelaufbautrommel,
- wobei zwei hintereinander angeordnete umlaufende Fördermittel ohne seitlichen Anschlag für den Aufbaustreifen zum seitlichen Ausrichten des Aufbaustreifens ausgebildet sind, von denen wenigstens das in Förderrichtung vorgeordnete Fördermittel gesteuert seitlich verschiebbar ausgebildet ist,
- wobei eine Sensoreinrichtung mit insbesondere wenigstens zwei Sensoren zur Ermittlung der Position der Seitenkanten des Gürtelaufbaustreifens ausgebildet sind,
- mit Mitteln zum gesteuerten Halten der vorderen Spitze des Gürtelaufbaustreifens im Bereich des zweiten Fordermittels,
- wobei die Sensoreinrichtung, die Antriebsmittel und die Mittel zum gesteuerten Halten so gekoppelt sind, daß durch seitliche Verschiebung des in Förderrichtung vorgeordneten Fördermittels gegenüber dem nachgeordneten Fördermittel in einem ersten Schritt die in Förderrichtung vordere Spitze des Gürtelaufbaustreifens in seiner Formgebung und Position ausgerichtet werden, daß in einem zweiten Schritt das Hauptteil des Gürtelaufbaustreifens in seiner Formgebung und seiner seitlichen Position mittensymmetrisch ausgerichtet wird, und daß in einem dritten Schritt die hintere in Gegenförderrichtung weisende Spitze hinsichtlich ihrer Formgebung und in ihrer seitlichen Position ausgerichtet wird.

14. Vorrichtung gemäß den Merkmalen von Anspruch 13,
- bei der an dem in Förderrichtung vorgeordneten ersten Fördermittel eine Trennvorrichtung zum Abschneiden der Gürtelaufbaustreifen von einem Gürtelbandmaterial auf dem ersten Fördermittel angeordnet ist.

15. Vorrichtung gemäß den Merkmalen von Anspruch 14,
- bei der im Bereich des zweiten nachgeordneten Fördermittels ein Sensor (18) zur Erfassung der Vorderkante des Bandmaterials zur Längenermittlung des Abstandes zwischen Vorderkante des Bandmaterials und der Trennvorrichtung ausgebildet ist,
- bei der die Trennvorrichtung so ausgebildet ist, daß sie, sobald der Abstand zwischen Vorderkante des Bandmaterials und der Trennvorrichtung dem der gewünschten Länge des Gürtelaufbaustreifens entspricht, den Gürtelaufbaustreifen abschneidet.

16. Vorrichtung gemäß den Merkmalen von Anspruch 13,
- bei der oberhalb des zweiten in Förderrichtung nachgeordneten Fördermittels eine drehbar gelagerte anhebbare und absenkbare Auflagerolle (13) so gesteuert ausgebildet ist, daß sie zum gesteuerten Halten der vorderen Spitze zum Ausrichten der Spitze so gesteuert abgesenkt wird, daß sie, sobald die vordere Spitze (37) des geförderten Gürtelaufbaustreifenmaterials in ihren Einflußbereich gelangt, auf diese Spitze (37) zur Erhöhung der Reibkraft zwischen Gürtelaufbaustreifen und Fördermittel abgesenkt wird, und daß sie so gesteuert angehoben wird, daß sie während der mittensymmetrischen Ausrichtung des Hauptteils angehoben ist.

17. Vorrichtung gemäß den Merkmalen von Anspruch 16,
- bei der oberhalb des ersten Fördermittels eine drehbar gelagerte, anhebbare und absenkbare Auflagerolle (14) so gesteuert ausgebildet ist, daß sie auf die vordere Spitze zur Erhöhung des Reibkontakts zwischen Fördermittel und Gürtelaufbaustreifen abgesenkt und bei mittensymmetrischer Ausrichtung angehoben ist.
